# EUROPEAN PATENT SPECIFICATION

(11) **EP 0 617 895 B1**
(45) Date of publication and mention of the grant of the patent: **03.01.1996**
(21) Application number: 93105000.9
(22) Date of filing: 26.03.1993
(51) Int. Cl.: A21C 15/00

(54) **Applicator**
Applikator
Applicateur

(43) Date of publication of application: 05.10.1994
(73) Proprietor: FRISCO-FINDUS AG, CH-9400 Rorschach (CH)
(72) Inventor: Milohanic, Slobodan, S-262 52 Aengelholm (SE)
(74) Representative: Pate, Frederick George

(56) References cited:
- FR-A- 2 651 096
- US-A- 1 904 742
- US-A- 3 537 406
- US-A- 4 131 080
- GB-A-Q12862 (LOOSE-WILES BISCUIT CO.) 28 September 1916

## Description

The present invention relates to an applicator for dosing a layer of filling on a continuously moving substrate e.g. a dough travelling along a straight line.

The accurate automatic moulding and dosing of a thin layer of sauce intermittently onto a sheeted dough travelling on a continuously moving conveyor is difficult to achieve, especially if the sauce is viscous. Filling is often applied by hand but, even by this method, it is still difficult to achieve the desired precision.

A complex biscuit creaming machine is known from US-A-1,904,742. The machine comprises a train of biscuit platforms which during the creaming pass along a semicircular path beneath a co-operating rotary stencil plate mounted co-axially with the semicircular path. The machine provides means for individually lifting the biscuit pans for creaming.

We have devised a simple applicator for dosing a filling which is suitable for any type of pumpable filling independent of the viscosity, and whereby the filling may be applied with high precision with respect to position, shape and thickness.

Accordingly, the present invention provides an applicator for dosing a layer of filling onto a substrate travelling on a continuously moving conveyor comprising a conveyor, a nozzle having a mould opening in its lower surface and provided with a means for supplying a filling into the the mould opening, means for reciprocating the nozzle horizontally in the direction of travel of the conveyor, characterised in that the applicator is adapted to dose the filling onto the substrate when the latter is travelling along a straight line, and in that means are further provided for reciprocating the nozzle vertically above the conveyor such that in one cycle,
a) the nozzle descends so that the border of the mould opening contacts a substrate travelling on the conveyor,
b) the filling is fed into the mould opening,
c) the nozzle advances downstream at substantially the same speed as the conveyor with the filling in the mould opening lying on the substrate,
d) the nozzle ascends leaving the moulded filling forming a layer on the substrate, and
e) the nozzle retracts upstream to its original position.

The conveyor is conveniently an endless belt and may be adapted to advance continuously or intermittently.

The nozzle advantageously comprises a valve house whose lower surface is a base plate formed within which is a mould opening. The means for supplying a filling to the nozzle and the means for reciprocating the nozzle are conveniently fitted to a valve tap to which the nozzle is slidably fitted so that it may reciprocate horizontally along the valve tap while the nozzle and the valve tap are adapted to reciprocate vertically together.

The means for supplying a filling to the nozzle may conveniently be a dosing tube connected to a supply of the filling and a pump for supplying the filling. The pump is preferably adapted to supply a predetermined amount of the filling depending on the shape and depth of the mould opening.

The means for reciprocating the nozzle vertically and horizontally may advantageously be provided by hydraulic or pneumatic cylinders and associated pistons. Advantageously, a sensor may be provided on the cylinder for reciprocating the nozzle horizontally to indicate the completion of the moulding. The sensor may be a magnetic sensor which is activated by the piston at the end of its movement.

The means for reciprocating the nozzle vertically preferably ensures that in the descended position, the nozzle i.e. the base plate surrounding the mould opening contacts the substrate lightly so as not to substantially distort the shape of the substrate, and that in the raised position, the nozzle no longer contacts the filling.

The substrate may be, for instance, a sheeted dough and the filling may be any pumpable fluid such as a sauce.

The shape, thickness and the amount of the filling dosed onto the substrate may be varied easily by replacing the valve house with one having a mould opening with different dimensions and adjusting the pump for the filling, if necessary, to distribute the appropriate amount of filling.

Conveniently, the pumping means for the filling and the reciprocating means for the nozzle are sequence controlled by a computer to enable automatic operation.

The present invention also provides a process for dosing a layer of filling onto a substrate travelling along a straight line on a continuously moving conveyor which comprises advancing a substrate on a conveyor beneath a nozzle having a mould opening in its lower surface, descending the nozzle so that the border of the mould opening contacts the substrate travelling on the conveyor, feeding a filling into the mould opening, advancing the nozzle downstream at substantially the same speed as the conveyor transporting the substrate with the filling in the mould opening lying on the substrate, raising the nozzle to leave the moulded filling forming a layer on the substrate, and retracting the nozzle upstream to its original position.

The present invention will now be further illustrated by example only with reference to the accompanying drawings in which
**Figure 1**
   represents a perspective view of the applicator positioned above a conveyor at the start of the dosing operation,
**Figure 2**
   represents a perspective view of the applicator at the termination of the dosing operation,
**Figure 3**
   represents the valve house and
**Figure 4**
   represents the valve tap.

Referring to the drawings, the applicator generally designated 10 is positioned above an endless conveyor belt 11 adapted to run continuously transporting a sheet of Pitte bread 12. The applicator comprises a valve tap 13, and a valve house 14. The valve tap 13 is adapted to reciprocate vertically with the valve house and is provided with an opening 15 and a solid block 16 to which is fixed a dosing tube 17 supplied by a pump (not shown). Fitted to the valve tap 13 is a pneumatic cylinder 18 mounted on a fixed support 19 with a vertically reciprocating piston 20 passing through an opening in the fixed support 19 and a pneumatic cylinder 21 provided with a magnetic sensor 22 mounted on a lug 23 with a horizontally reciprocating piston 24 passing through an opening 25 in the lug 23. The valve house 14 which is slidably mounted on the valve tap 13 and adapted to reciprocate horizontally in the direction of the arrows comprises side walls 26 formed with internal grooves 27 shaped to slide along the valve tap 13, a nozzle consisting of a base plate 28 formed within which is a mould opening 29, and a cross bar 30 fitted with a lug 31 having an opening 32 to which piston 24 is connected. Moulded fillings 33 are shown on the conveyor belt. The operating of the applicator is controlled by a computer (not shown).

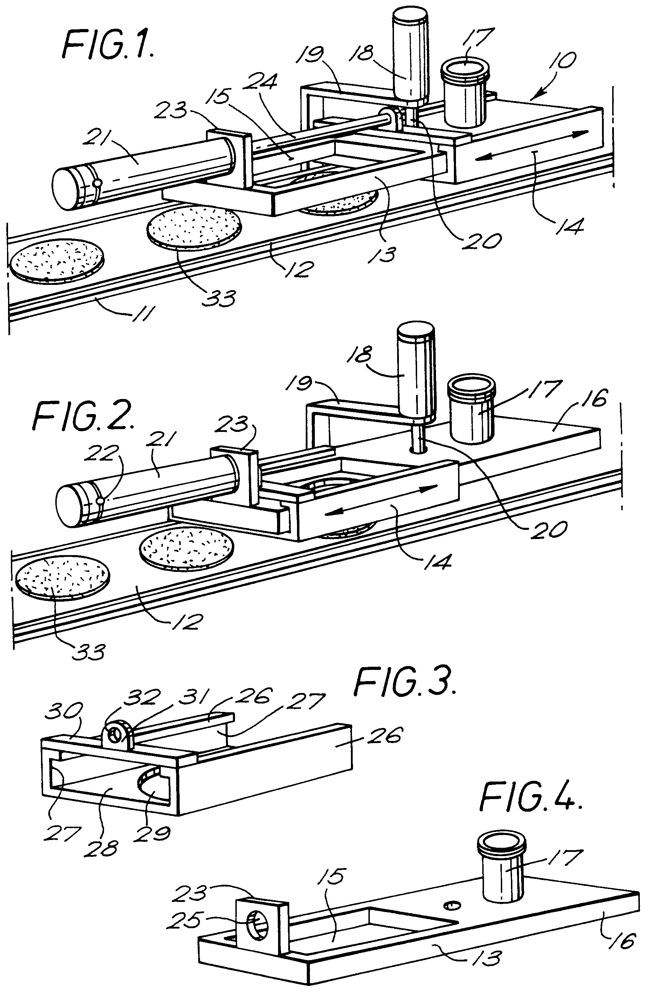

In operation, the conveyor belt 11 transporting a sheet of Pitte bread 12 advances continuously to the left in Figures 1 and 2 of the drawings. At the start of a cycle as shown in Figure 1 the piston 20 descends to lower the whole applicator 10 so that the nozzle consisting of the base plate 28 formed within which is the mould opening 29 contacts the Pitte bread with light pressure. The pump is activated by the computer to supply a predetermined amount of a sauce filler 33 which passes through the dosing tube 17 into the mould opening 29 where it lies on the sheet of Pitte bread 12. As the conveyor belt 11 advances continuously, the piston 24 retracts to the left in Figures 1 and 2 of the drawings at the same speed as the conveyor belt causing by means of its connection to the lug 31, the valve house 14 to slide to the left along the valve tap 13 with the nozzle still lightly contacting the Pitte bread 12 while the filling 33 is moulded to the contours of the mould opening 29. When the moulding is completed at the position shown in Figure 2, the sensor 22 is activated by the end of the piston 24 and sends a signal to the computer which activates the piston 20 to ascend to raise the whole applicator 10 to a height sufficient for the nozzle to be lifted clear of the moulded filling 33 and then the piston 24 moves to the right in Figures 1 and 2 of the drawings to cause, by means of its connection to the lug 31, the valve house 14 to slide to the right along the valve tap 13 to the position shown in Figure 1 where a new cycle is commenced by the piston 20 descending to lower the whole applicator.

Moulded fillings 33 are thus dosed consecutively onto the Pitte bread at high speed e.g. 40 cycles per minute, and with great accuracy.

There are thus very few moving parts of the applicator according to this invention and the shape, thickness and amount of filling may be varied easily by replacing the valve house with one having a mould opening with different dimensions.

## Claims

1. An applicator (10) for dosing a layer of filling (33) onto a substrate (12) travelling on a continuously moving conveyor (11) comprising, a conveyor (11), a nozzle (28) having a mould opening (29) in its lower surface and provided with a means for supplying a filling (33) into the the mould opening (29), means for reciprocating the nozzle (28) and horizontally in the direction of travel of the conveyor (11) characterised in that the applicator is adapted to dose the filling (33) onto the substrate while the latter is travelling in a straight line, and in that means are further provided for reciprocating the nozzle (28) vertically above the conveyor, such that in one cycle,
a) the nozzle (28) descends so that the border of the mould opening (29) contacts a substrate (12) travelling on the conveyor (11),
b) the filling (33) is fed into the mould opening (29),
c) the nozzle (28) advances downstream at substantially the same speed as the conveyor (11) with the filling (33) in the mould opening (29) lying on the substrate (12),
d) the nozzle (28) ascends leaving the moulded filling (33) forming a layer on the substrate (12), and
e) the nozzle (28) retracts upstream to its original position.

2. An applicator (10) according to claim 1 wherein the nozzle (28) comprises a valve house (14) whose lower surface is a base plate (28) formed within which is a mould opening (29).

3. An applicator (10) according to claim 1 wherein the means for supplying a filling (33) to the nozzle (28) and the means for reciprocating the nozzle are fitted to a valve tap (13) to which the nozzle (28) is slidably fitted so that it may reciprocate horizontally along the valve tap (13) while the nozzle (28) and the valve tap (13) are adapted to reciprocate vertically together.

4. An applicator (10) according to claim 1 wherein the means for supplying the filling (33) to the nozzle (28) is a dosing tube (17) connected to a supply of the filling (33) and a pump for supplying the filling (33).

5. An applicator (10) according to claim 4 wherein the pump is adapted to supply a predetermined amount of the filling (33).

6. An applicator (10) according to claim 1 wherein the means for reciprocating the nozzle vertically and horizontally is provided by pneumatic cylinders (18, 21).

7. An applicator (10) according to claim 6 wherein a sensor (22) to indicate the completion of the moulding is provided on the cylinder (21) for reciprocating the nozzzle (28) horizontally.

8. An applicator (10) according to claim 1 wherein the means for reciprocating the nozzle (28) vertically ensures that in the descended position, the nozzle (28) contacts the substrate (12) lightly so as not to substantially distort the shape of the substrate (12).

9. An applicator (10) according to claim 1 wherein the means for reciprocating the nozzle (28) vertically ensures that in the raised position, the nozzle (28) no longer contacts the filling (33).

10. A process for dosing a layer of filling (33) onto a substrate (12) travelling along a straight line on a continuously moving conveyor (11) which comprises advancing a substrate (12) on a conveyor (11) beneath a nozzle (28) having a mould opening (29) in its lower surface, descending the nozzle (28) so that the border of the mould opening (29) contacts the substrate (12) travelling on the conveyor (11), feeding a filling (33) into the mould opening (29), advancing the nozzle (28) downstream at substantially the same speed as the conveyor (11) transporting the substrate (12) with the filling (33) in the mould opening (29) lying on the substrate (12), raising the nozzle (28) to leave the moulded filling (33) forming a layer on the substrate (12), and retracting the nozzle (28) upstream to its original position.

## Patentansprüche

1. Aufträger (10) zur Dosierung einer Füllschicht (33) auf einem Substrat (12), welches sich auf einem kontinuierlich bewegenden Fördermittel (11) bewegt, der ein Fördermittel (11), eine Düse (28), welche an ihrer unteren Fläche eine Gießöffnung (29) besitzt, und welche mit einem Mittel zum Zuführen einer Füllung (33) in die Gießöffnung (29) ausgestattet ist, und Mittel zum horizontalen in Richtung der Bewegung des Fördermittels (11) Hin- und Herbewegen der Düse (28) aufweist,
dadurch **gekennzeichnet,**
daß der Aufträger ausgebildet ist, die Füllung (33) auf dem Substrat zu dosieren, während letzteres sich in einer geraden Linie bewegt und
daß weiter Mittel zum vertikalen über dem Fördermittel Hin- und Herbewegen der Düse (28) derart vorgesehen sind, daß in einem Kreislauf,
a) die Düse (28) abwärts fährt, so daß die Begrenzung der Gießöffnung (29) das sich auf dem Fördermittel (11) bewegende Substrat (12) berührt,
b) die Füllung (33) in die Gießöffnung (29) gefüllt wird,
c) die Düse (28) mit im wesentlichen der gleichen Geschwindigkeit wie das Fördermittel (11) mit der Füllung (33) in der auf dem Substrat (12) aufliegendenden Gießöffnung (29) stromab vorwärtsbewegt wird,
d) die Düse (28) eine gegossene eine Schicht auf dem Substrat (12) bildende Füllung (33) zurücklassend aufwärts fährt, und
e) die Düse (28) stromauf zu ihrer ursprünglichen Position zurückbewegt wird.

2. Aufträger (10) gemäß Anspruch 1, bei dem die Düse (28) ein Ventilgehäuse (14) enthält, dessen untere Fläche eine Grundplatte (28) ist, innerhalb der die Gießöffnung (29) gebildet ist.

3. Aufträger (10) gemäß Anspruch 1, bei dem die Mittel zum Zuführen der Füllung (33) zu der Düse (28) und die Mittel zum Hin- und Herbewegen der Düse an einem Ventilglied (13) angebracht sind, an welchem die Düse (28) gleitbar angebracht ist, so daß sie horizontal entlang des Ventilglieds (13) hin- und herbewegt werden kann, während die Düse (28) und das Ventilglied (13) vertikal zusammen hin- und herbewegt werden können.

4. Aufträger (10) gemäß Anspruch 1, bei dem die Mittel zum Zuführen der Füllung (33) zu der Düse (28) eine Dosierungsröhre (17) ist, die mit einem Vorrat von Füllung (33) und einer Pumpe zum Zuführen der Füllung (33) verbunden ist.

5. Aufträger (10) gemäß Anspruch 4, bei dem die Pumpe so ausgebildet ist, daß sie einen vorherbestimmten Betrag an Füllung (33) zuführt.

6. Aufträger (10) gemäß Anspruch 1, bei dem das Mittel zum vertikalen und horizontalen Hin- und Herbewegen der Düse (28) durch Pneumatikzylinder (18,21) gebildet ist.

7. Aufträger (10) gemäh Anspruch 6, bei dem ein Sensor (22) zur Anzeige der Vollendung des Gießens an dem Zylinder (21) zum horizontalen Hin- und Herbewegen der Düse (28) vorgesehen ist.

8. Aufträger (10) gemäß Anspruch 1, bei dem das Mittel zum vertikalen Hin- und Herbewegen der Düse (28) sicherstellt, daß in der abwärtsgefahrenen Position die Düse (28) das Substrat (12) leicht berührt, so daß sie die Form des Substrates (12) nicht wesentlich deformiert.

9. Aufträger (10) gemäß Anspruch 1, bei dem das Mittel zum vertikalen Hin- und Herbewegen der Düse (28) sicherstellt, daß in einer angehobenen Position die Düse (28) die Füllung (33) nicht mehr berührt.

10. Verfahren zur Dosierung einer Füllschicht (33) auf einem Substrat (12), welches sich in einer geraden Linie auf einem sich kontinuierlich bewegenden Fördermittel (11) bewegt, welches Verfahren aufweist,
ein Vorwärtsbewegen des Substrats (12) auf dem Fördermittel (11) unterhalb einer Düse (28), welche eine Gießöffnung (29) an ihrer unteren Fläche aufweist,
ein Abwärtsfahren der Düse (28), so daß die Begrenzung der Gießöffnung (29) das sich auf dem Fördermittel bewegende Substrat (12) berührt,
ein Zuführen der Füllung (33) in die Gießöffnung (29),
ein Vorwärtsbewegen der Düse (28) stromab mit im wesentlichen der gleichen Geschwindigkeit, wie das das Substrat (12) transportierende Fördermittel (11), wobei die Füllung (33) in der auf dem Substrat (12) liegenden Gießöffnung (29) ist,
ein Anheben der Düse (28), um die gegossene eine Schicht auf dem Substrat (12) bildende Füllung (33) zurückzulassen, und
ein Zurückbewegen der Düse (28) stromauf zu ihrer Ausgangsposition.

## Revendications

1. Applicateur (10) destiné à doser une couche de garniture (33) sur un substrat (12) en déplacement sur un transporteur (11) se déplaçant de façon continue, comprenant un transporteur (11), une buse (28) ayant une douille (29) à sa surface inférieure et pourvue d'un moyen pour amener une garniture (33) dans la douille (29), des moyens pour faire aller et venir horizontalement la buse (28) dans le sens de déplacement du transporteur (11), caractérisé en ce que l'applicateur est adapté pour doser la garniture (33) sur le substrat pendant que ce dernier se déplace en ligne droite, et en ce que des moyens sont en outre prévus pour faire aller et venir verticalement la buse (28) au-dessus du transporteur, de sorte que durant un cycle,
a) la buse (28) descend de façon telle que l'extrémité de la douille (29) vient au contact d'un substrat (12) en déplacement sur le transporteur (11),
b) la garniture (33) est amenée dans la douille (29),
c) la buse (28) avance vers l'aval, à une vitesse sensiblement identique à celle du transporteur (11), la garniture (33) se trouvant dans la douille reposant sur le substrat (12),
d) la buse (28) remonte en laissant la garniture moulée (33) qui forme une couche sur le substrat (12), et
e) La buse (28) se retire vers l'amont à sa position originale.

2. Applicateur (10) selon la revendication 1, dans lequel la buse (28) comprend une chambre de vanne (14) dont la surface inférieure est une plaque d'embase (28) formée et à l'intérieur de laquelle se trouve une douille (29).

3. Applicateur (10) selon la revendication 1, dans lequel le moyen pour amener une garniture (33) à la buse (28) et les moyens pour faire aller et venir la buse sont fixés à un plateau de vanne (13) auquel est fixée en coulissement la buse (28), de sorte que celle-ci peut aller et venir horizontalement le long du plateau de vanne (13) tandis que la buse (28) et le plateau de vanne (13) sont adaptés pour aller et venir verticalement ensemble.

4. Applicateur (10) selon la revendication 1, dans lequel le moyen pour amener une garniture (33) à la buse (28) est un tube de dosage (17) connecté à un réservoir de garniture (33) et une pompe pour amener la garniture (33).

5. Applicateur (10) selon la revendication 4, dans lequel la pompe est adaptée pour amener une quantité prédéterminée de garniture (33).

6. Applicateur (10) selon la revendication 1, dans lequel les moyens pour faire aller et venir la buse, horizontalement et verticalement, peuvent être fournis par des cylindres pneumatiques (18, 21).

7. Applicateur (10) selon la revendication 6, dans lequel un capteur (22) pour indiquer la fin du moulage est prévu sur le cylindre (21) destiné à faire aller et venir horizontalement la buse (28).

8. Applicateur (10) selon la revendication 1, dans lequel les moyens pour faire aller et venir verticalement la buse (28) garantissent que, dans la position descendue, la buse (28) vient légèrement au contact du substrat (12) de façon à ne pas déformer sensiblement la forme du substrat (12).

9. Applicateur (10) selon la revendication 1, dans lequel les moyens pour faire aller et venir verticalement la buse (28) garantissent que, dans la position relevée, la buse (28) ne vient plus au contact de la garniture (33).

10. Procédé destiné à doser une couche de garniture (33) sur un substrat (12) en déplacement en ligne droite sur un transporteur (11) se déplaçant de façon continue, qui comprend les étapes consistant à faire avancer un substrat (12) sur un transporteur (11) au-dessous d'une buse (28) ayant une douille (29) à sa surface inférieure, à faire descendre la buse (28) de façon telle que l'extrémité de la douille (29) vienne au contact du substrat (12) en déplacement sur le transporteur (11), à amener une garniture (33) dans la douille (29), à faire avancer la buse (28) vers l'aval, à une vitesse sensiblement identique à celle du transporteur (11) transportant le substrat (12), la garniture (33) se trouvant dans la douille (29) reposant sur le substrat (12), à faire remonter la buse (28) de façon à laisser la garniture moulée (33) qui forme une couche sur le substrat (12), et à faire remonter la buse (28) vers l'amont à sa position originale.
